# EUROPEAN PATENT APPLICATION

(11) **EP 4 817 867 A1**
(43) Date of publication of application: **07.10.2026**
(21) Application number: 25382345.4
(22) Date of filing: 04.04.2025
(51) Int. Cl.: B32B 7/12, B32B 15/08, B32B 15/20, B32B 27/30, B32B 27/36

(54) **THERMAL MANAGEMENT SYSTEM IN FILM FORMAT**

(71) Applicant: Cooling Photonics, S.L., 08039 Barcelona (ES)
(72) Inventor: Magaña Rodriguez, Jose Rodrigo, Barcelona (ES); Jaramillo Fernandez, Juliana, Barcelona (ES); Yorulmaz, Kemal, Barcelona (ES); Lladós Flores, Ares, Barcelona (ES); Jacobo Martin, Alejandra, Barcelona (ES); Onteniente Torregrosa, Manuel Antonio, Barcelona (ES); Cuenca Tamarit, Antonio, Barcelona (ES)
(74) Representative: Balder IP Law, S.L.

(57) **Abstract**

The invention relates to a thermal management system in film format, characterised in that it comprises a solar radiation reflective layer configured to be applied to a surface, an infrared radiation emitting layer, arranged on the solar radiation reflective layer, wherein the reflective layer acts as a diffuse reflector and/or specular reflector. Likewise, the invention relates to the use of said thermal management system as a heat sink or thermal bridge.

## Description

### Technical field

The present invention relates to a thermal management system in film format as a heat sink or thermal bridge. More specifically, the invention relates to a thermal management system in film format, characterised in that it comprises a solar radiation reflective layer configured to be applied to a surface, an infrared radiation emitting layer, arranged on the solar radiation reflective layer, wherein the reflective layer acts as a diffuse reflector and/or specular reflector.

### Background of the invention

Thermal management systems based on radiative cooling represent an innovative and efficient solution for temperature control in a wide variety of applications.

Radiative cooling refers to the ability of a material or system to dissipate heat by emitting thermal radiation to outer space, particularly at specific wavelengths within the infrared spectrum. It is important to differentiate between radiative cooling and daytime radiative cooling. During the day, solar radiation is intense and heats the materials, making it difficult for the radiation emitted for cooling to offset the heat absorbed. Unlike traditional methods of heat dissipation, which use conduction or convection mechanisms, radiative cooling does not require direct physical contact with a fluid or medium, making it a highly efficient and passive process.

This phenomenon is based on thermal radiation in a wavelength range called "infrared atmospheric window", wherein specialised materials can emit thermal energy and exchange it with the upper layers of the atmosphere, which is at significantly lower temperatures, allowing a surface to be cooled passively. Advances in the design of materials that optimise this process, such as coatings with high emissivity in the infrared range, have opened up new possibilities in the cooling of electronic devices, buildings, and industrial applications.

The use of radiative cooling systems is becoming increasingly important due to their ability to reduce energy consumption in air conditioning systems and improve efficiency in high temperature systems, making these systems a key tool in modern thermal management and in the fight against global warming.

In the meantime, the development of thermal management systems that are efficient, cost-effective and easy to implement in a variety of industrial applications, such as heat sinks or thermal bridges, remains crucial. The present invention provides a solution to that problem.

### Summary of the invention

In a first aspect, the invention relates to a thermal management system in film format characterised in that it comprises:
- a solar radiation reflective layer comprising a metal or polymer substrate, configured to be applied to a surface,
- an infrared radiation emitting layer, arranged on the solar radiation reflective layer, wherein the reflective layer acts as a diffuse reflector and/or specular reflector.

The different layers of the thermal management system in film format of the invention fulfil specific and complementary functions: a reflective layer, which minimises solar heat absorption, and an emitting layer, which promotes heat dissipation by infrared radiation for cooling. To that end, the system of the invention is particularly effective during the daytime period. Likewise, the thermal management system in film format is cost-effective as it pays for itself in less than 1 year compared to the amount of cooling required to maintain the surface at 25°C using active cooling methods. The film format allows for easy application in established infrastructures. Passively, in other words, without the need for an external energy source, it dissipates heat in fluxes of at least 100 W/m² by infrared radiation under solar radiation of up to 1000 W/m². Passively, it is capable of reducing the temperature of a surface by up to 4°C below ambient temperature under solar radiation of up to 1000 W/m².

In a second aspect, the invention relates to the method for manufacturing the thermal management system of the present invention. Said method comprises the following steps:
a) providing a solar radiation reflective film;
b) preparing and cleaning the surface of the reflective film; and
e) applying the infrared radiation emitting film to the film from the previous step by means of pressure and temperature.

In a third aspect, the invention relates to the use of the thermal management system of the present invention as a heat sink or thermal bridge.

### Description of the figures

To complement the description that is being made and for the purpose of helping to better understand the features of the invention, a set of figures is attached as an integral part of said description wherein the following has been depicted with an illustrative and non-limiting character:
Fig. 1. Diagram of a preferred embodiment of the thermal control system of the invention wherein (1) is the substrate, (2) is the primary reflective layer of silver, (3) is a nanometric layer of titanium oxide, (4) is a nanometric layer of silicon oxide, (5) is a layer of acrylic adhesive, and (6) is an emitting layer of polyvinyl fluoride.
Fig. 2. Diagram of the temperature measurement assembly, wherein (21) is an enclosure made of insulating material, (22) is a thermometer in direct contact with the sample (23).
Fig. 3. Image of the electric motor showing the areas (31) where the thermal management system of the invention was applied.
Fig. 4. Image of the electric motor with a thermal camera showing the temperature difference between the areas without a thermal management system and those with a thermal management system.
Fig. 5. Temperature versus time graphs for the different parts of the electric motor without a thermal management system (A) and with an external thermal management system (B), wherein the overall temperature is represented by the solid line, the temperature of the heat sink with the dashed line, the brake temperature with the dotted line, and the axle temperature with the dash-dotted line.
Fig. 6. Temperature versus time graphs for the heat sink without a thermal management system (solid line) and with an external thermal management system (dotted line).
Fig. 7. Configuration of the enclosed electronics systems containing a 10W heat source (71), the sensor of the heater plate (72), and the sensor of the cover (73), wherein (A) has no management system, (B) has a thermal management system (dashed line) outside it and (C) has a thermal management system outside and inside it.
Fig. 8. Arrangement of the sensors in the enclosures used in the comparative examples. The 5 sensing points (81, 82, 83, 84 and 85) are shown in their respective positions.

### Detailed description of the invention

The present invention provides a thermal management system in film format, which includes a solar radiation reflective layer designed to be applied to a surface, and an infrared radiation emitting layer located above the reflective layer. The reflective layer acts as a diffuse reflector and/or specular reflector, providing heat dissipation functions or functions as a thermal bridge. This system is optimised to improve thermal efficiency in various applications, combining the reflection of solar radiation with controlled infrared emission for effective thermal management.

More specifically, the present invention is based on a thermal management system in film format characterised in that it comprises:
- a solar radiation reflective layer comprising a metal or polymer substrate, configured to be applied to a surface,
- an infrared radiation emitting layer, arranged on the solar radiation reflective layer,
wherein the reflective layer acts as a diffuse reflector and/or specular reflector.

In a preferred embodiment of the thermal management system of the invention, the solar radiation reflective layer has an albedo equal to or greater than 60%, preferably an albedo between 90% and 100%.

In a preferred embodiment of the thermal management system of the invention, the roughness of the reflective layer is between 0 and 40 nm, preferably the roughness of the reflective layer is less than 5 nm. In a preferred embodiment of the thermal management system of the invention, the solar radiation reflective layer is between 0.01 and 5000 microns thick, preferably between 0.1 and 10 microns.

In a preferred embodiment of the thermal management system of the invention, the infrared radiation emitting layer is solar radiation transparent or translucent, but absorbs and emits infrared radiation with an infrared emitting capacity equal to or greater than 0.6, preferably between 0.6 and 1. The term "solar radiation transparent" refers to a material that allows the transmission of light through it with minimal absorption, reflection or dispersion, which makes it possible to clearly see the objects on the other side in the wavelength range of 300 to 2500 nm. The term "translucent" refers to a material which structure allows the transmission of light through it, but with a significant dispersion, which prevents the formation of clear images of the objects on the other side. This phenomenon occurs due to the interaction of light with irregularities or heterogeneities within the material, which cause light scattering.

In a preferred embodiment of the thermal management system of the invention, it further comprises an adhesive, which is arranged in the form of an intermediate layer between the solar radiation reflective layer and the infrared radiation emitting layer, or alternatively, it is embedded within the reflective layer.

In a preferred embodiment of the thermal management system of the invention, the adhesive or adhesive layer is optically invisible in the UV-visible-NIR spectrum. The term "optically invisible in the UV-visible spectrum" refers to a material that transmits more than 95% of light in the wavelength range of 200 to 2500 nm.

In the preferred embodiment of the thermal management system of the invention, the adhesive layer is optically invisible in the UV-visible-NIR spectrum and is between 20 and 500 microns thick, preferably between 20 and 150 microns.

In a preferred embodiment of the thermal management system of the invention, the optically invisible adhesive layer comprises an adhesive selected from inorganic polymer adhesives or organic polymeric adhesives, preferably selected from acrylic-based adhesives, silicone-based adhesives or polyurethane-based adhesives.

In a preferred embodiment of the thermal management system of the invention, the reflective layer comprises a layer of steel, silver or aluminium on the substrate. The solar radiation reflective layer may contain other outer layers to maximise reflectance. The composition of these materials comprises metal oxides such as silicon, titanium, etc.

In a preferred embodiment of the thermal management system of the invention, the reflective layer may further comprise at least one nanometric layer, deposited on the substrate by different deposition techniques or surface modification methods by spraying. The material of the nanometric layer(s) is selected from the group of silicon dioxide, silicon carbide, silicon nitride, aluminium hydroxide, aluminium oxide, zinc oxide, barium sulphide, magnesium silicate, barium sulphate, calcium carbonate, titanium dioxide, titanium nitride, aluminium nitride or mixtures thereof. In the most preferred embodiment of the thermal management system of the invention, the at least one nanometric layer is between 1 and 200 nm thick.

In a preferred embodiment of the thermal management system of the invention, the nanometric layers are deposited by chemical vapour deposition, by thermal spraying or Magneton sputtering.

In a preferred embodiment of the thermal management system of the invention, the infrared radiation emitting layer comprises an organic polymer selected from polyurethane (PU), polyvinyl fluoride (PVF), polyvinyl chloride (PVC), and polyethylene terephthalate (PET) and polyethylene naphthalate (PEN). In the preferred embodiment of the thermal management system of the invention, the infrared radiation emitting layer is between 10 and 500 microns thick, preferably between 20 and 150 microns.

In the most preferred embodiment of the thermal management system of the invention, the solar radiation reflective layer is between 0.1 and 5000 microns thick, preferably between 0.1 and 10 microns, and the infrared radiation emitting layer is between 10 and 500 microns thick, preferably between 20 and 150 microns.

In the preferred embodiment of the thermal management system of the invention, the thermal management system in film format comprises a solar radiation reflective layer deposited on an aluminium substrate configured to be applied to a surface, wherein the reflective layer comprises the following nanometric layers arranged consecutively on the substrate: a layer of silver, a layer of titanium oxide and a layer of silicon oxide, an infrared radiation emitting layer, arranged on the solar radiation reflective layer, and an acrylic adhesive layer between the reflective layer and the emitting layer, wherein the reflective layer acts as a diffuse reflector and/or specular reflector.

In another embodiment of the thermal management system of the invention, the system further comprises fastening means on the substrate-facing surface of the reflective layer, preferably the fastening means are adhesive, magnetic or physical.

The second aspect of the invention relates to the use of the thermal management system as a heat sink or thermal bridge.

In its third aspect, the invention relates to a method for manufacturing the thermal management system in film format according to the first aspect of the invention, characterised in that it comprises the following steps:
a) providing a solar radiation reflective film comprising a metal or polymer substrate;
b) preparing and cleaning the surface of the reflective film; and
d) applying the infrared radiation emitting film to the film from the previous step by means of pressure and temperature.

In the preferred embodiment of the third aspect of the invention, the method for manufacturing the thermal management system in film format according to the first aspect of the invention is characterised in that it comprises the following steps:
a) providing a solar radiation reflective film comprising a metal or polymer substrate;
b) preparing and cleaning the surface of the reflective film;
c) applying the adhesive to the film from the previous step; and
d) applying the infrared radiation emitting film to the film from the previous step by means of pressure and temperature.

In the third aspect of the invention, the term "film" has been used as a synonym for "layer" to describe the method for manufacturing the thermal management system in film format.

In a preferred embodiment of the third aspect of the invention, the manufacturing method further comprises a step of deposition on the substrate of the reflective film by deposition techniques of one or more nanometric layers of a material selected from the group of silicon dioxide, silicon carbide, silicon nitride, aluminium hydroxide, aluminium oxide, zinc oxide, barium sulphide, magnesium silicate, barium sulphate, calcium carbonate, titanium dioxide, titanium nitride, aluminium nitride, or mixtures thereof. More preferably, the deposition step comprises the consecutive deposition of a layer of silicon oxide and a layer of titanium oxide on the substrate of the reflective layer.

The deposition techniques used for the formation of the nanometric layers can be chemical vapour deposition (CVD) or thermal spraying, but there are also other options such as physical vapour deposition (PVD), atomic layer deposition (ALD), and electrochemical deposition.

In the preferred embodiment of the third aspect of the invention, the method for manufacturing the thermal management system in film format according to the first aspect of the invention is characterised in that it comprises the following steps:
a) providing a solar radiation reflective film comprising a metal or polymer substrate;
b) depositing on the reflective film by means of deposition techniques one or more nanometric layers of a material selected from the group of silicon dioxide, silicon carbide, silicon nitride, aluminium hydroxide, aluminium oxide, zinc oxide, barium sulphide, magnesium silicate, barium sulphate, calcium carbonate, titanium dioxide, titanium nitride, aluminium nitride or mixtures thereof;
c) preparing and cleaning the surface of the reflective film;
d) applying the adhesive to the film from the previous step; and
e) applying the infrared radiation emitting film to the film from the previous step by means of pressure and temperature.

In the more preferred embodiment of the third aspect of the invention, the method for manufacturing the thermal management system in film format according to the first aspect of the invention is characterised in that it comprises the following steps:
a) providing a solar radiation reflective film comprising a silver metal substrate;
b) depositing a nanometric layer of titanium dioxide and a nanometric layer of silicon dioxide consecutively on the substrate of the previous reflective film by means of deposition techniques;
c) preparing and cleaning the surface of the reflective film obtained in the previous step;
d) applying the adhesive to the film from the previous step; and
e) applying the infrared radiation emitting film to the film from the previous step by means of pressure and temperature, wherein the infrared radiation emitting film is polyvinyl fluoride (PVF).

The invention will now be explained in greater detail using the examples and figures below.

### Examples

### Example 1. Manufacturing and evaluation of the thermal management system

Various thermal management system in film format, according to examples 1 to 3, were prepared by a method including the following steps:
a) Provision of a solar radiation reflective film, according to the aforementioned examples.
b) Successive deposition of the corresponding nanometric layers on the reflective film, using advanced deposition techniques.
c) Thorough preparation and cleaning of the surface of the reflective film to ensure proper adhesion.
d) Application of a specialised adhesive on the film treated in the previous step.
e) Placing the infrared radiation emitting film on the film resulting from the previous step, by means of a controlled pressure and temperature process, ensuring optimal integration of the layers.

This method ensures the formation of an effective thermal management system, with well-integrated layers and improved thermal properties.

**Table 1. Detail of the examples of the thermal management systems of the invention. The thicknesses of the different layers are specified between parentheses.**

| | **Example 1** | **Example 2** | **Example 3** |
|---|---|---|---|
| **Substrate** | Metal | Steel | Polyethylene terephthalate |
| **Solar radiation reflective layer** | White paint (170 µm) | Silver (150 nm) | Aluminium (7 µm) |
| **Reflected sunlight** | 80% | 95 % | 85% |
| **Nanometric layer(s)** | - | TiO₂ (70 nm) | - |
| | | SiO₂ (60 nm) | |
| **Adhesive** | - | acrylic-based adhesives | acrylic-based adhesives |
| **Infrared radiation emitting layer** | Polyurethane and acrylic base | Polyvinyl fluoride (25 µm) | Polyvinyl fluoride (25 µm) |
| **Directional emissivity in the atmospheric window** | 0.95 | 0.94 | 0.91 |
| **Temperature difference compared to ambient temperature (25°C) during the day and a maximum irradiance of 1000 W/m² (Material T.-Ambient T.)** | 1.7°C | -0.5°C | 3.0°C |

The reflected sunlight values were calculated from the reflection spectrum of the material in a spectrophotometer with integrating sphere in the wavelength range, λ, from 0.3 µm to 2.5 µm and from a standardised spectrum of solar radiation (Radsun). The % of reflected sunlight is calculated as follows: $R% = \frac{{\int }_{0.3}^{2.5} {Rad}_{sun} ∗ {R}_{material} ∗ dλ}{{\int }_{0.3}^{2.5} {Rad}_{sun} dλ}$ Equation 1

The emissivity in the atmospheric window was calculated at ambient temperature (T = 25°C), 298.15 K) by comparing it with the blackbody radiation intensity at the same temperature. The blackbody radiation intensity was calculated according to Equation 2, wherein h, c, k and T are Planck's constant (6.626e⁻³⁴ J·s), speed of light (2.998e⁸ m/s), Boltzmann constant (1.38064e⁻²³ J·K) and temperature in degrees Kelvin (K). $bb \left(T\right) = \frac{2 ∗ h ∗ {c}^{2} / {λ}^{5}}{{e}^{h ∗ \frac{c}{λkT}} - 1}$ Equation 2

Directional emissivity, ε, is then calculated from the absorbance spectrum in the infrared atmospheric window (8 µm to 13 µm) of the material measured in a spectrophotometer with integrating sphere and from the blackbody radiation intensity spectrum (bb(T)) at the temperature of said material according to Equation 3. $ε = \frac{{\int }_{8}^{13} bb \left(T\right) ∗ {Abs}_{material} ∗ dλ}{{\int }_{8}^{13} bb \left(T\right) dλ}$ Equation 3

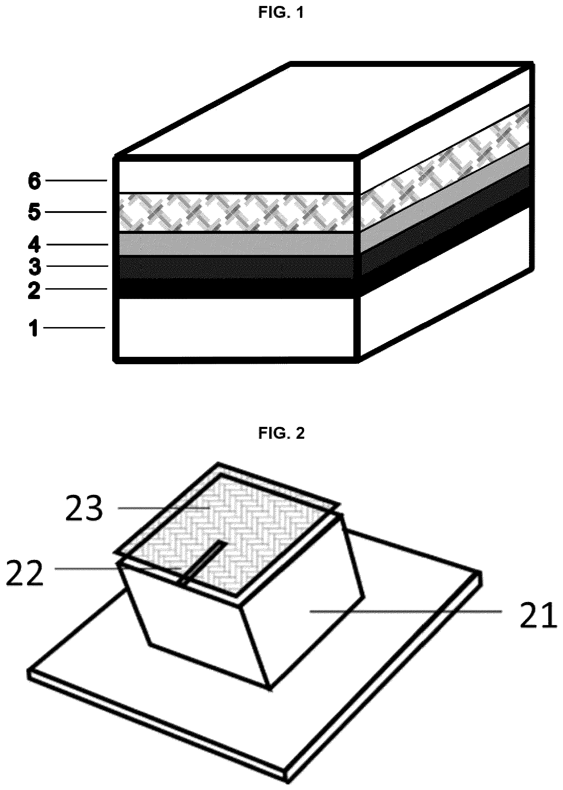

The comparative measurements of materials in table 1 were performed outdoors using enclosures specifically designed for this purpose. As shown in figure 2, each enclosure (21) measures 14 × 14 × 10 cm (length × width × height) and is made of expanded polystyrene, an insulating material, coated with aluminised polyethylene to reflect sunlight. It contains a thermometer (22) that is in direct contact with the sample (23) to record the temperature of the surface. The measurements were monitored over several days with a measuring device placed 1.5 m above the ground.

### 2. Dissipation tests

### 2.1 Evaluation of the thermal management system in film format - Dissipation in electric motors

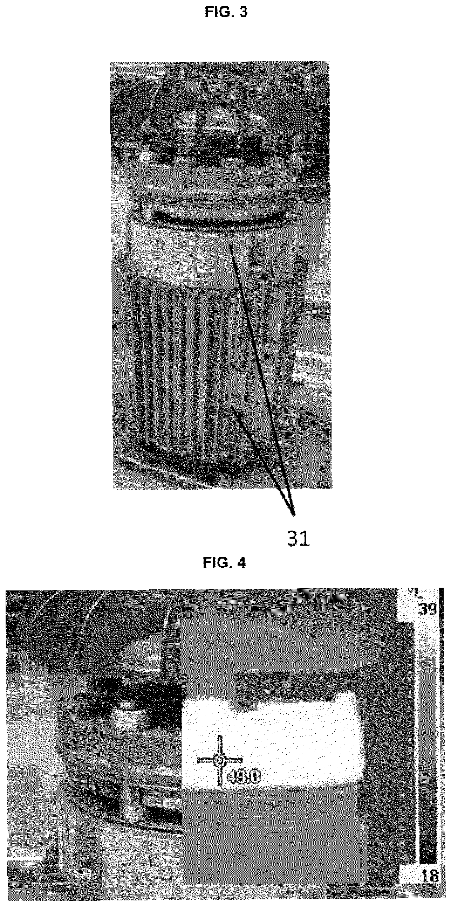

The dissipation capacity of the thermal management system of the invention, in particular example 2, was evaluated by applying it to critical parts of an electric motor. The system was installed on the heat sink and brake (31), as shown in figure 3. Test runs were performed with the motor running with and without the thermal management system under the same boundary and operating conditions, operating and charging time.

The measurements of temperatures measured by a thermographic camera of points on the motor are identified as General, Heat Sink, Brake and Axle during both test sessions as shown in figure 4.

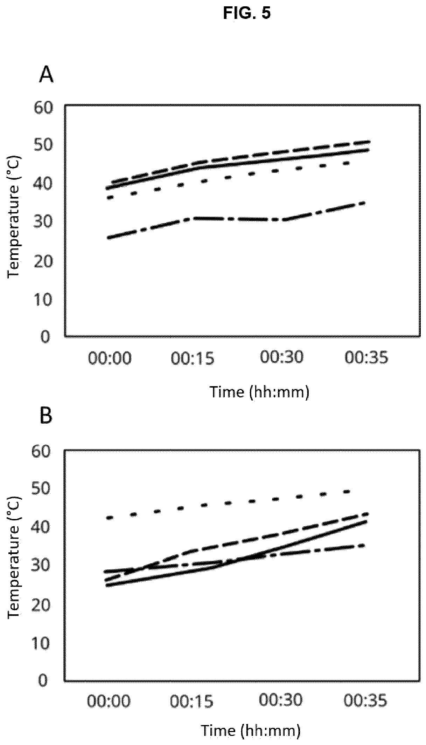

The results in figure 5 clearly show a reduction in the temperature of the different elements identified in the motor. Particularly relevant is the drop in temperature of up to 15 degrees on the heat sink.

### 2.2 Evaluation of the thermal management system in film format - Thermoelectric generator

The dissipation capacity of the thermal management system of the invention, in particular example 2, was evaluated by applying it to the copper heat sink of a thermoelectric generator.

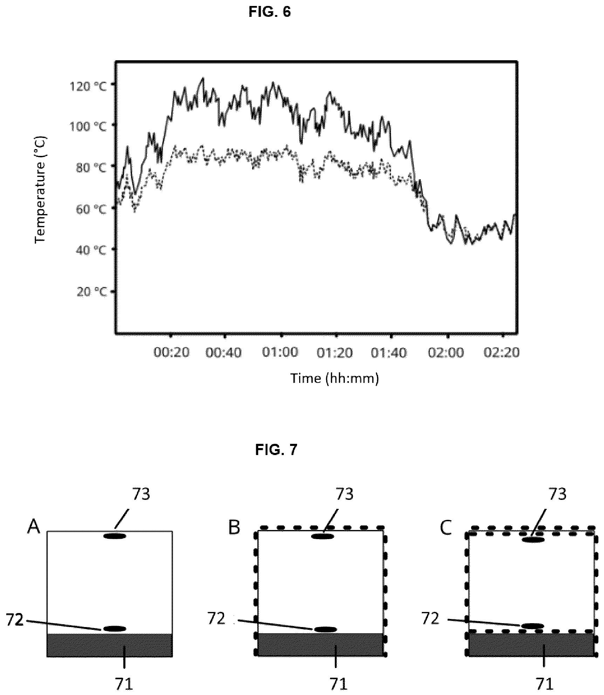

As shown in figure 6, under the same operating conditions, the heat sink coated by the thermal management system of the invention showed a significantly lower temperature compared to an uncoated heat sink, reaching a reduction of approximately 24°C.

### 3. Evaluation of the thermal management system in film format - Thermal bridge

### 3.1 Evaluation of the thermal management system in an enclosed electronics system

The capacity of the system of the invention to act as a thermal bridge was evaluated by simulating an enclosed electronics system.

The enclosed electronics system consisted of a galvanised steel enclosure, with dimensions of 150 x 150 x 50 mm, standardised according to IP65, i.e., dust-tight and protected against sprayed water. The boundary conditions were 23°C, controlled room temperature, at a relative humidity of 50%.

To emulate the thermal operation of the 10 watt (W) power electronics, a 10 W power heater (71) and two sensors, one on the heater (72) and another on the cover of the enclosure (73), were installed in each enclosure as shown in figure 7A. The system was compared to an equivalent electronics system with the thermal management system of example 2 coating the outside of the enclosure (figure 7B) and to the equivalent electronics system with the thermal management system of example 2 coating the outside and the inside as shown in figure 7C.

During the test, the heater was activated for 2700 seconds (45 minutes) and the cooling process was monitored. The thermal management system described in figure 7C, compared to the electronic system without thermal management, resulted in a temperature reduction on the cover of up to 30°C, and a significant temperature variation in the heater, reaching a difference of up to 35°C less.

### 3.2 Evaluation of the thermal management system in an outdoor storage system for electronic devices

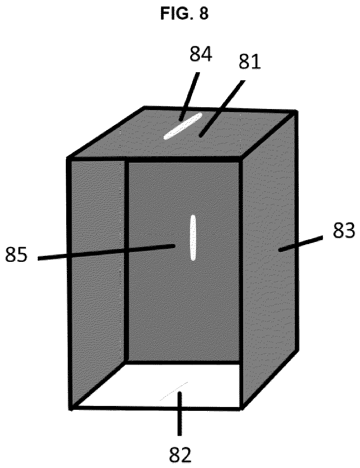

The thermal management system of example 2 was evaluated in enclosures used for the outdoor storage of electronic devices. An enclosure without a thermal management system and an enclosure with a thermal management system installed on its outer surface were evaluated. Both enclosures were installed on the outside, including the same form of 5-point sensing (81, 82, 83, 84 and 85) through each enclosure as shown in figure 8. Table 2 shows the readings obtained on the hottest day of July 2024 (21/07/2024).

**Table 2. Comparison of the maximum temperature detected by the sensors 1 to 5 in both boxes.**

| **Sensor** | **Enclosure without a Thermal Management System** | **Enclosure with a Thermal Management System** |
|---|---|---|
| Sensor 1 | 52.9°C | 34°C |
| Sensor 2 | 48°C | 35.2°C |
| Sensor 3 | 40.8°C | 33.7°C |
| Sensor 4 | 46.1°C | 35°C |
| Sensor 5 | 42.3°C | 35.2°C |

As observed in table 2, all five sensors in the box with the thermal management system recorded a considerably lower temperature.

Additionally, a heat source, electronics in both enclosures with a power of 25 W, was installed, and a new comparison was made on the hottest day of August 2024 (29/08/2024). This is shown in table 3.

**Table 3. Comparison of the maximum temperature detected by the sensors 1 to 5 in both boxes with a heat source.**

| **Sensors** | **Enclosure without a Thermal Management System** | **Enclosure with a Thermal Management System** |
|---|---|---|
| Sensor 1 | 47.1°C | 32.2°C |
| Sensor 2 | 47.9°C | 34.3°C |
| Sensor 3 | 39.7°C | 35.9°C |
| Sensor 4 | 44°C | 33.9°C |
| Sensor 5 | 41°C | 34.9°C |

As observed in table 3, all five sensors in the box with the thermal management system recorded a considerably lower temperature even with a heat source installed inside the box.

## Claims

1. A thermal management system in film format, **characterised in that** it comprises:
- a solar radiation reflective layer comprising a metal or polymer substrate, configured to be applied to a surface,
- an infrared radiation emitting layer, arranged on the solar radiation reflective layer,
wherein the reflective layer acts as a diffuse reflector and/or specular reflector.

2. The thermal management system according to the preceding claim, **characterised in that** it further comprises an adhesive, which is arranged in the form of an intermediate layer between the solar radiation reflective layer and the infrared radiation emitting layer, or alternatively, it is embedded within the reflective layer.

3. The composite system according to the preceding claim, wherein the solar radiation reflective layer has an albedo equal to or greater than 60%, preferably an albedo between 90% and 100%.

4. The composite system according to any of the preceding claims, wherein the infrared radiation emitting layer is transparent or translucent, with an emitting capacity equal to or greater than 0.6, preferably between 0.6 and 1.

5. The composite system according to any of the preceding claims 2-4, wherein the adhesive layer is optically invisible in the UV-visible spectrum, wherein the optically invisible adhesive layer is between 20 and 250 microns thick, preferably between 20 and 150 microns.

6. The composite system according to any of claims 4-5, wherein the optically invisible adhesive layer comprises an adhesive selected from inorganic polymer adhesives or organic polymeric adhesives, preferably selected from acrylic-based adhesives, silicone-based adhesives or polyurethane-based adhesives.

7. The composite system according to any of the preceding claims, wherein the reflective layer comprises a layer of steel, silver or aluminium on the substrate, preferably comprising a layer of silver on the substrate.

8. The composite system according to any of the preceding claims, wherein the reflective layer comprises at least one nanometric layer, deposited on said substrate by different deposition techniques or surface modification methods by spraying, wherein the material of said nanometric layer is selected from the group of silicon dioxide, silicon carbide, silicon nitride, aluminium hydroxide, aluminium oxide, zinc oxide, barium sulphide, magnesium silicate, barium sulphate, calcium carbonate, titanium dioxide, titanium nitride, aluminium nitride, or mixtures thereof.

9. The composite system according to the preceding claim, wherein the nanometric layers are deposited by chemical vapour deposition, by thermal spraying or Magneton sputtering.

10. The composite system according to any of claims 8 to 9, wherein the at least one nanometric layer is between 1 and 200 nm thick.

11. The composite system according to any of the preceding claims, wherein the infrared radiation emitting layer comprises an organic polymer selected from polyurethane (PU), polyvinyl fluoride (PVF), polyvinyl chloride (PVC) and polyethylene terephthalate (PET) and polyethylene naphthalate (PEN).

12. The composite system according to any of the preceding claims, wherein the solar radiation reflective layer is between 0.1 and 5000 microns thick, preferably between 0.1 and 10 microns, and/or wherein the infrared radiation emitting layer is between 10 and 500 microns thick, preferably between 20 and 150 microns.

13. The composite system according to any of the preceding claims, wherein the system further comprises fastening means on the substrate-facing surface of the reflective layer, preferably the fastening means are adhesive, magnetic or physical.

14. Use of the thermal management system according to any of claims 1 to 13 as a heat sink or thermal bridge.

15. A method for manufacturing the thermal management system in film format according to any of claims 1 to 14, **characterised in that** it comprises the following steps:
a) providing a solar radiation reflective film;
b) optionally, depositing by means of deposition techniques one or more nanometric layers of a material selected from the group of silicon dioxide, silicon carbide, silicon nitride, aluminium hydroxide, aluminium oxide, zinc oxide, barium sulphide, magnesium silicate, barium sulphate, calcium carbonate, titanium dioxide, titanium nitride, aluminium nitride or mixtures thereof;
c) preparing and cleaning the surface of the reflective film;
d) optionally, applying the adhesive to the film from the previous step; and
e) applying the infrared radiation emitting film to the film from the previous step by means of pressure and temperature.
